# EUROPEAN PATENT APPLICATION

(11) **EP 4 439 998 A1**
(43) Date of publication of application: **02.10.2024**
(21) Application number: 22922333.4
(22) Date of filing: 27.10.2022
(51) Int. Cl.: H04B 7/08, H04B 17/318, H04W 68/02, H04B 17/336

(54) **ELECTRONIC DEVICE FOR BEAM SEARCHING, AND OPERATION METHOD FOR ELECTRONIC DEVICE**

(30) Priority: 21.01.2022 KR 20220008954; 07.03.2022 KR 20220028806
(71) Applicant: Samsung Electronics Co., Ltd., Suwon-si, Gyeonggi-do 16677 (KR)
(72) Inventor: KIM, Junsuk, Suwon-si, Gyeonggi-do 16677 (KR); LEE, Hyoungjoo, Suwon-si, Gyeonggi-do 16677 (KR); YANG, Minho, Suwon-si, Gyeonggi-do 16677 (KR); KIM, Taeyoon, Suwon-si, Gyeonggi-do 16677 (KR); JUNG, Euichang, Suwon-si, Gyeonggi-do 16677 (KR); LIM, Chaeman, Suwon-si, Gyeonggi-do 16677 (KR)
(74) Representative: HGF
(86) International application number: PCT/KR2022/016569
(87) International publication number: WO 2023/140474

(57) **Abstract**

An electronic device according to various embodiments comprises: a wireless communication circuit; and a processor operatively connected to the wireless communication circuit, wherein the processor can receive a first signal, which includes information indicating whether a paging message is present, from an external device through a physical downlink control channel (PDCCH), confirm whether the identification (ID) of the electronic device is present from the paging message received through a physical downlink shared channel (PDSCH), in response to confirming that the paging message is present, confirm the quality of the first signal and the quality of a synchronization signal block (SSB) received from the external device, in response to confirming that the ID of the electronic device is present in the paging message, and determine whether to search for a new reception beam for wireless communication with the external device, in response to confirming that the quality of the first signal and/or the quality of the SSB satisfies specified conditions.

## Description

### [Technical Field]

The disclosure relates to an electronic device, and for example, to an apparatus and method for selecting an optimal reception beam by the electronic device.

### [Background Art]

Since the commercialization of 4G communication systems, the demand for wireless data traffic has been increasing. In order to perform wireless communication at faster speeds, efforts are being made to develop improved 5G communication systems or pre-5G communication systems. The 5G communication systems or pre-5G communication systems may be systems beyond the 4G networks or long-term evolution (LTE) systems. To achieve high data rates, 5G communication systems may provide wireless communication services in ultra-high frequency (millimeter wave, mmWave) bands (e.g., 30 to 300 GHz bands). The 5G communication systems may be referred to as next-generation mobile communication systems.

In wireless communication in the ultra-high frequency band, the straightness of radio waves becomes stronger, and large radio wave path loss may occur. Beam forming technology may increase the transmission distance of radio waves while mitigating the path loss of radio waves in ultra-high frequency bands. Electronic devices according to various embodiments may perform wireless communication in an ultra-high frequency, band based on beamforming technology.

### [Disclosure of Invention]

### [Technical Problem]

The 5G communication system may perform communication by using directional beams at a base station and a terminal to compensate for a relatively large path loss. When using beamforming, the base station and the terminal should select an optimal beam (e.g., a transmission beam and/or a reception beam) to be used to transmit and/or receive a signal. For example, the base station and the terminal may measure the reception signal strength for all combinations of available beams. The optimal beam may include a transmission beam and/or a reception beam included in a combination of beams having the highest reception signal strength.

When using beamforming in the 5G communication system, current consumption may occur because the reception signal strength for all combinations of beams must be measured to select the optimal beam for the base station and the terminal, and delays for optimal beam selection may occur.

Various embodiments of the disclosure disclose an apparatus and method for selecting an optimal reception beam, based on the strength of a reception signal in an electronic device (e.g., a terminal).

### [Solution to Problem]

An electronic device according to various embodiments may include a wireless communication circuit and a processor operatively connected to the wireless communication circuit, and the processor may receive a first signal, which includes information indicating whether a paging message is present, from an external device through a physical downlink control channel (PDCCH), identify whether the identification (ID) of the electronic device is present from the paging message received through a physical downlink shared channel (PDSCH), in response to identifying that the paging message is present, identify the quality of the first signal and the quality of a synchronization signal block (SSB) received from the external device, in response to identifying that the identification (ID) of the electronic device is present in the paging message, and determine whether to search for a new reception beam for wireless communication with the external device, in response to identifying that at least one of the quality of the first signal or the quality of the synchronization signal block (SSB) satisfies specified conditions.

An operating method of an electronic device that performs beam search according to various embodiments may include receiving a first signal, which includes information indicating whether a paging message is present, from an external device through a physical downlink control channel (PDCCH), identifying whether the identification (ID) of the electronic device is present from the paging message received through a physical downlink shared channel (PDSCH), in response to identifying that the paging message is present, identifying the quality of the first signal and the quality of a synchronization signal block (SSB) received from the external device, in response to identifying that the identification (ID) of the electronic device is present in the paging message, and determining whether to search for a new reception beam for wireless communication with the external device, in response to identifying that at least one of the quality of the first signal or the quality of the synchronization signal block (SSB) satisfies specified conditions.

### [Advantageous Effects of Invention]

According to various embodiments of the disclosure, an electronic device (e.g., a terminal) may reduce the delay in selecting a reception beam by selecting the optimal reception beam for wireless communication with the external device (e.g., a base station) in response to the wireless communication environment (e.g., the amount of change in the reception signal strength or SINR) and/or the movement of the electronic device, and adaptively select a reception beam according to changes in the wireless communication environment.

According to various embodiments, an electronic device (e.g., a terminal) may reduce current consumption by minimizing the operation of searching for an optimal reception beam, based on the strength of the reception signal.

### [Brief Description of Drawings]

FIG. 1 is a block diagram of an electronic device in a network environment according to various embodiments.
FIG. 2 is a block diagram of an electronic device for supporting legacy network communication and 5G network communication according to various embodiments.
FIG. 3 is a diagram illustrating a protocol stack structure of a 4G communication and/or 5G communication network according to various embodiments.
FIG. 4 is a block diagram of an electronic device for selecting a reception beam according to various embodiments.
FIG. 5A illustrates paging message transmission and reception operations of an electronic device in an NSA 5G network environment and an SA 5G network environment according to various embodiments.
FIG. 5B illustrates the relationship between a synchronization signal block (SSB) and a paging occasion (PO) in a communication process of an electronic device according to various embodiments.
FIG. 6A illustrates a process for searching for the optimal beam combination of an electronic device according to various embodiments.
FIG. 6B illustrates a synchronization loop update process of an electronic device according to various embodiments.
FIG. 6C illustrates a paging message reception process of an electronic device according to various embodiments.
FIG. 7 is a flowchart illustrating a method of determining whether to perform an optimal beam search operation of an electronic device according to various embodiments.

### [Mode for the Invention]

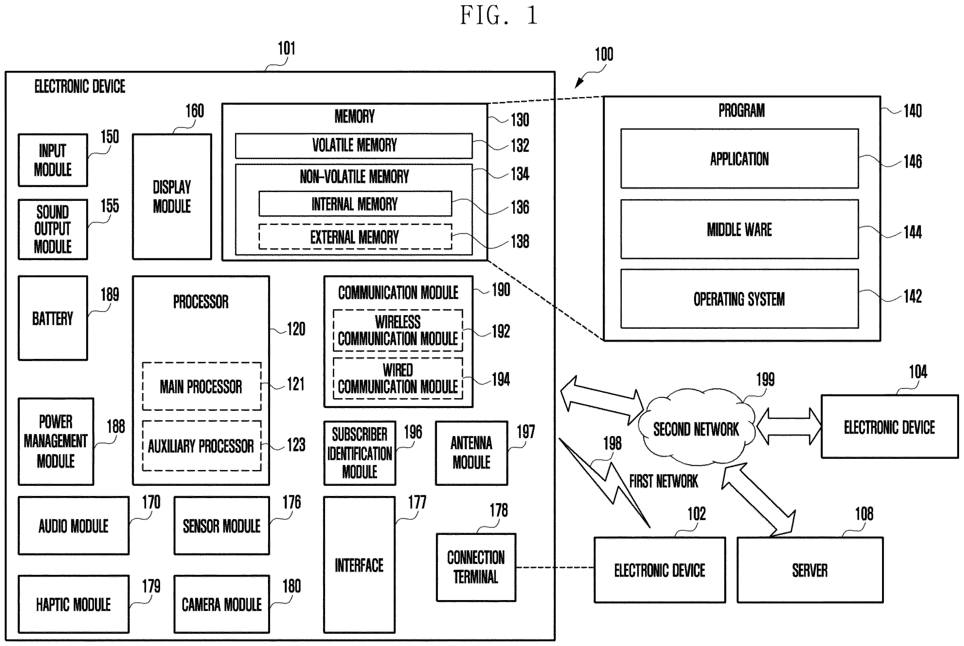

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultrareliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an interperipheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an applicationspecific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

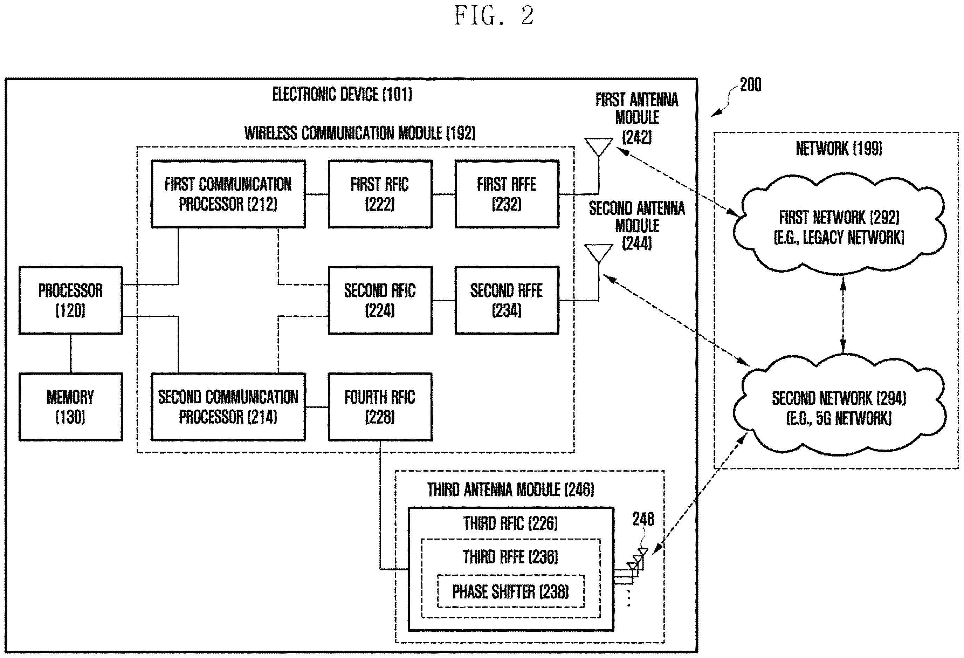

FIG. 2 is a block diagram 200 of an electronic device 101 for supporting legacy network communication and 5G network communication according to various embodiments.

Referring to FIG. 2, according to various embodiments, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include a processor 120 and a memory 130. A network 199 may include a first network 292 and a second network 294. According to another embodiment, the electronic device 101 may further include at least one of the components illustrated in FIG. 1, and the network 199 may further include at least one other network. According to an embodiment, the first communication processor 212, the second communication processor 214, the first RFIC 222, the second RFIC 224, the fourth RFIC 228, the first RFFE 232, and the second RFFE 234 may compose at least a part of a wireless communication module 192. According to another embodiment, the fourth RFIC 228 may be omitted or included as part of the third RFIC 226.

The first communication processor 212 may establish a communication channel of a band to be used for wireless communication with the first network 292, and support legacy network communication through the established communication channel. According to an embodiment, the first network may be a legacy network including a second generation (2G), 3G, 4G, or long-term evolution (LTE) network. The second communication processor 214 may establish a communication channel corresponding to a specified band (e.g., about 6 GHz to about 60 GHz) among bands to be used for wireless communication with the second network 294, and support 5G network communication through the established communication channel. According to an embodiment, the second network 294 may be a 5G network (e.g., new radio (NR)) defined by 3GPP. In addition, according to an embodiment, the first communication processor 212 or the second communication processor 214 may establish a communication channel corresponding to another specified band (e.g., about 6 GHz or less) among bands to be used for wireless communication with the second network 294, and support 5G network communication through the established communication channel. According to an embodiment, the first communication processor 212 and the second communication processor 214 may be implemented on a single chip or in a single package. According to an embodiment, the first communication processor 212 or the second communication processor 214 may be composed on a single chip or in a single package with the processor 120, the auxiliary processor 123 or the communication module 190.

According to an embodiment, the first communication processor 212 may transmit and receive data to and from the second communication processor 214. For example, data that was classified to be transmitted through the second network 294 may be changed to be transmitted through the first network 292.

In this case, the first communication processor 212 may receive transmission data from the second communication processor 214. For example, the first communication processor 212 may transmit and receive data to and from the second communication processor 214 through an inter-processor interface. As an example, the inter-processor interface may be implemented as a universal asynchronous receiver/transmitter (UART) (e.g., high speed-UART (HS-UART)) or peripheral component interconnect bus express (PCIe) interface, but there is no limitation on the type. For example, the first communication processor 212 and the second communication processor 214 may exchange control information and packet data information by using a shared memory. As an example, the first communication processor 212 may transmit and receive various information such as sensing information, information on output strength, and resource block (RB) allocation information to and from the second communication processor 214.

Depending on the implementation, the first communication processor 212 may not be directly connected to the second communication processor 214. In this case, the first communication processor 212 may transmit and receive data to and from the second communication processor 214 through the processor 120 (e.g., an application processor). For example, the first communication processor 212 and the second communication processor 214 may transmit and receive data to and from the processor 120 (e.g., an application processor) through the HS-UART interface or PCIe interface, but there is no limit to the type of interface. For example, the first communication processor 212 and the second communication processor 214 may exchange control information and packet data information by using the processor 120 (e.g., an application processor) and the shared memory. According to an embodiment, the first communication processor 212 and the second communication processor 214 may be implemented in a single chip or a single package. According to various embodiments, the first communication processor 212 or the second communication processor 214 may be implemented in a single chip or a single package with the processor 120, the auxiliary processor 123, or the communication module 190.

Upon transmission, the first RFIC 222 may convert the baseband signal generated by the first communication processor 212 into a radio frequency (RF) signal of about 700 MHz to about 3 GHz used in the first network 292 (e.g., a legacy network). Upon reception, an RF signal may be obtained from the first network 292 (e.g., a legacy network) through an antenna (e.g., the first antenna module 242), and preprocessed through an RFFE (e.g., the first RFFE 232). The first RFIC 222 may convert the preprocessed RF signal into a baseband signal to be processed by the first communication processor 212.

Upon transmission, the second RFIC 224 may convert the baseband signal generated by the first communication processor 212 or the second communication processor 214 into an RF signal (hereinafter referred to as a 5G sub-6 RF signal) of a sub-6 band (e.g., about 6 GHz or less) used in the second network 294 (e.g., a 5G network). Upon reception, a 5G sub-6 RF signal may be obtained from the second network 294 (e.g., a 5G network) through an antenna (e.g., the second antenna module 244), and preprocessed through an RFFE (e.g., the second RFFE 234). The second RFIC 224 may convert the preprocessed 5G sub-6 RF signal into a baseband signal to be processed by a corresponding communication processor among the first communication processor 212 and the second communication processor 214.

The third RFIC 226 may convert the baseband signal generated by the second communication processor 214 into an RF signal (hereinafter referred to as a 5G above-6 RF signal) of a 5G above-6 band (e.g., about 6 GHz to about 60 GHz) used in the second network 294 (e.g., a 5G network). Upon reception, a 5G above-6 RF signal may be obtained from the second network 294 (e.g., a 5G network) through an antenna (e.g., the antenna 248), and preprocessed through the third RFFE 236. The third RFIC 226 may convert the preprocessed 5G above-6 RF signal into a baseband signal to be processed by the second communication processor 214. According to an embodiment, the third RFFE 236 may be composed as part of the third RFIC 226.

According to an embodiment, the electronic device 101 may include the fourth RFIC 228 separately from or at least as part of the third RFIC 226. In this case, the fourth RFIC 228 may convert the baseband signal generated by the second communication processor 214 into an RF signal (hereinafter referred to as an IF signal) of an intermediate frequency band (e.g., about 9 GHz to about 11 GHz) and transfer the IF signal to the third RFIC 226. The third RFIC 226 may convert the IF signal into a 5G above-6 RF signal. Upon reception, the 5G above-6 RF signal may be received from the second network 294 (e.g., a 5G network) through an antenna (e.g., the antenna 248) and converted to an IF signal by the third RFIC 226. The fourth RFIC 228 may convert the IF signal into a baseband signal so that the second communication processor 214 may process the same.

According to an embodiment, the first RFIC 222 and the second RFIC 224 may be implemented as a single chip or at least part of a single package. According to an embodiment, the first RFFE 232 and the second RFFE 234 may be implemented as a single chip or at least part of a single package. According to an embodiment, at least one antenna module among the first antenna module 242 and the second antenna module 244 may be omitted or combined with another antenna module to process RF signals of a plurality of corresponding bands.

According to an embodiment, the third RFIC 226 and the antenna 248 may be disposed on the same substrate to compose third antenna module 246. For example, the wireless communication module 192 or the processor 120 may be disposed on a first substrate (e.g., main PCB). In this case, the third antenna module 246 may be composed by disposing the third RFIC 226 on a partial area (e.g., a lower surface) of a second substrate (e.g., a sub PCB) separate from the first substrate, and the antenna 248 on another partial area (e.g., an upper surface). By disposing the third RFIC 226 and the antenna 248 on the same substrate, it is possible to reduce the length of the transmission line therebetween. For example, loss (e.g., attenuation) of a signal of a high frequency band (e.g., about 6 GHz to about 60 GHz) used in 5G network communication by a transmission line may be reduced. As a result, the electronic device 101 may improve the quality or speed of communication with the second network 294 (e.g., a 5G network).

According to an embodiment, the antenna 248 may be composed as an antenna array including a plurality of antenna elements that may be used for beamforming. In this case, the third RFIC 226 may include, for example, a plurality of phase shifters 238 corresponding to a plurality of antenna elements as a part of the third RFFE 236. Upon transmission, each of the plurality of phase converters 238 may convert the phase of a 5G above-6 RF signal to be transmitted to the outside (e.g., a base station of a 5G network) of the electronic device 101 through a corresponding antenna element. Upon reception, each of the plurality of phase converters 238 may convert the phase of the 5G above-6 RF signal received from the outside through the corresponding antenna element into the same or substantially the same phase. This enables transmission or reception through beamforming between the electronic device 101 and the outside.

The second network 294 (e.g., a 5G network) may be operated independently (e.g., standalone (SA)) or connected to the first network 292 (e.g., a legacy network) (e.g., non-standalone (NSA)). For example, a 5G network may include only an access network (e.g., a 5G radio access network (RAN) or a next generation RAN (NG RAN)) but no core network (e.g., a next generation core (NGC)). In this case, after accessing the access network of the 5G network, the electronic device 101 may access an external network (e.g., the Internet) under the control of a core network (e.g., evolved packed core (EPC)) of the legacy network. Protocol information (e.g., LTE protocol information) for communication with a legacy network or protocol information (e.g., new radio (NR) protocol information) for communication with a 5G network may be stored in the memory 130 and may be accessed by other components (e.g., the processor 120, the first communication processor 212, or the second communication processor 214).

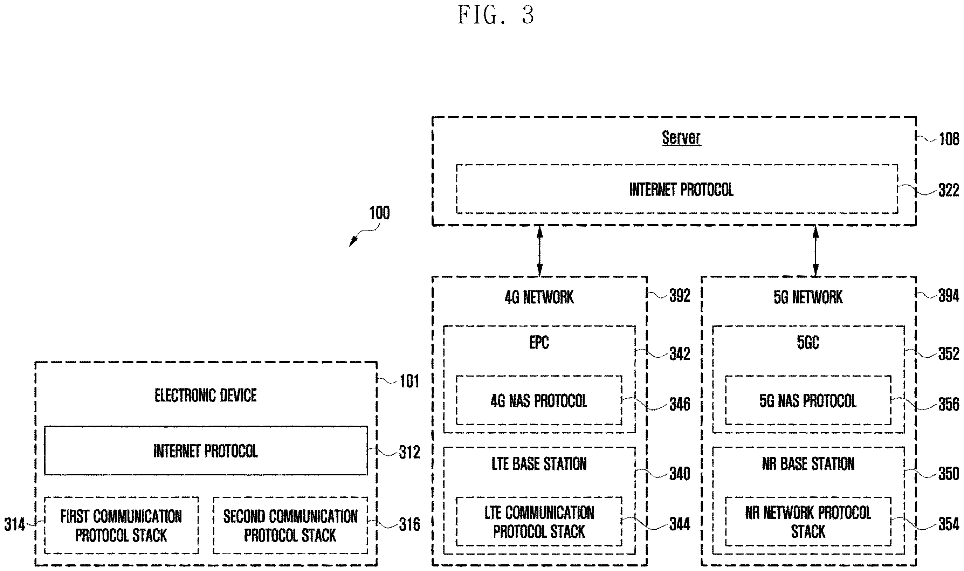

FIG. 3 is a diagram illustrating a protocol stack structure of a 4G communication and/or 5G communication network 100 according to various embodiments.

Referring to FIG. 3, according to various embodiments, the network 100 may include an electronic device 101, a 4G network 392, a 5G network 394 and a server 108.

According to various embodiments, the electronic device 101 may include an Internet protocol 312, a first communication protocol stack 314, and a second communication protocol stack 316. For example, the electronic device 101 may communicate with the server 108 through the 4G network 392 and/or the 5G network 394.

According to an embodiment, the electronic device 101 may perform Internet communication related to the server 108 by using the Internet protocol 312 (e.g., transmission control protocol (TCP), user datagram protocol (UDP), or Internet protocol (IP)). For example, the Internet protocol 312 may be executed in a main processor (e.g., the main processor 121 of FIG. 1) included in the electronic device 101.

According to another embodiment, the electronic device 101 may wirelessly communicate with the 4G network 392 by using the first communication protocol stack 314. According to another embodiment, the electronic device 101 may wirelessly communicate with the 5G network 394 by using the second communication protocol stack 316. For example, the first communication protocol stack 314 and the second communication protocol stack 316 may be executed in one or more communication processors (e.g., the wireless communication module 192 of FIG. 1) included in the electronic device 101.

According to various embodiments, the server 108 may include an Internet protocol 322. The server 108 may transmit and receive data related to the Internet protocol 322 to and from the electronic device 101 through the 4G network 392 and/or the 5G network 394. According to an embodiment, the server 108 may include a cloud computing server that exists outside of the 4G network 392 or the 5G network 394. According to another embodiment, the server 108 may include an edge computing server (or a mobile edge computing (MEC) server) located inside at least one of the 4G network 392 or the 5G network 394.

According to various embodiments, the 4G network 392 may include a long-term evolution (LTE) base station 340 and an evolved packed core (EPC) 342. The LTE base station 340 may include an LTE communication protocol stack 344. The EPC 342 may include a legacy non-access stratum (NAS) protocol 346. The 4G network 392 may perform LTE wireless communication with the electronic device 101 by using the LTE communication protocol stack 344 and the legacy NAS protocol 346.

According to various embodiments, the 5G network 394 may include a new radio (NR) base station 350 and a 5^{th} generation core (5GC) 352. The NR base station 350 may include an NR communication protocol stack 354. The 5GC 352 may include a 5GNAS protocol 356. The 5G network 394 may perform NR wireless communication with the electronic device 101 by using the NR communication protocol stack 354 and the 5G NAS protocol 356.

According to an embodiment, the first communication protocol stack 314, the second communication protocol stack 316, the LTE communication protocol stack 344, and the NR communication protocol stack 354 may include a control plane protocol for transmitting and receiving a control message and a user plane protocol for transmitting and receiving user data. For example, the control message may include, for example, a message related to at least one of security control, bearer setup, authentication, registration, or mobility management. For example, the user data may include data excluding control messages.

According to an embodiment, the control plane protocol and the user plane protocol may include physical (PHY), medium access control (MAC), radio link control (RLC), or packet data convergence protocol (PDCP) layers. For example, the PHY layer may channel-code and modulate data received from a higher layer (e.g., MAC layer) and transmit the data through a radio channel, demodulate and decode data received through the radio channel, and transmit the data to the higher layer. The PHY layer included in the second communication protocol stack 316 and the NR communication protocol stack 354 may further perform an operation related to beam forming. For example, the MAC layer may logically/physically map data to a radio channel to be transmitted/received, and perform hybrid automatic repeat request (HARQ) for error correction. For example, the RLC layer may perform concatenation, segmentation, or reassembly of data, and order check, rearrangement, or redundancy check of data. For example, the PDCP layer may perform operations related to ciphering and data integrity of control data and user data. The second communication protocol stack 316 and the NR communication protocol stack 354 may further include a service data adaptation protocol (SDAP). For example, the SDAP may manage radio bearer assignment based on quality of service (QoS) of user data.

According to various embodiments, the control plane protocol may include a radio resource control (RRC) layer and a non-access stratum (NAS) layer. For example, the RRC layer may process radio bearer setup, paging, or control data related to mobility management. For example, the NAS may process control messages related to authentication, registration, and mobility management.

According to various embodiments, the electronic device 101 may include a plurality of subscriber identification modules (e.g., a first subscriber identification module and a second subscriber identification module). According to an embodiment, the electronic device 101 may communicate with the 4G network 392 and/or the 5G network 394, based on subscriber information (e.g., international mobile subscriber identity (IMSI) stored in each of a plurality of subscriber identification modules (e.g., the first subscriber identification module and the second subscriber identification module).

According to various embodiments, the electronic device 101 may further include a third communication protocol stack (not illustrated) and a fourth communication protocol stack (not illustrated) to support a plurality of subscriber identification modules. For example, the third communication protocol stack may correspond to the first communication protocol stack 314 and include various protocols for wireless communication with the 4G network 392. For example, the fourth communication protocol stack may correspond to the second communication protocol stack 316, and include various protocols for wireless communication with the 5G network 394. According to an embodiment, when performing communication by using the first subscriber identification module, the electronic device 101 may perform wireless communication with the 4G network 392 by using the first communication protocol stack 314 and wireless communication with the 5G network 394 by using the second communication protocol stack 316. According to an embodiment, when performing communication by using the second subscriber identification module, the electronic device 101 may perform wireless communication with the 4G network 392 by using the third communication protocol stack and wireless communication with the 5G network 394 by using the fourth communication protocol stack.

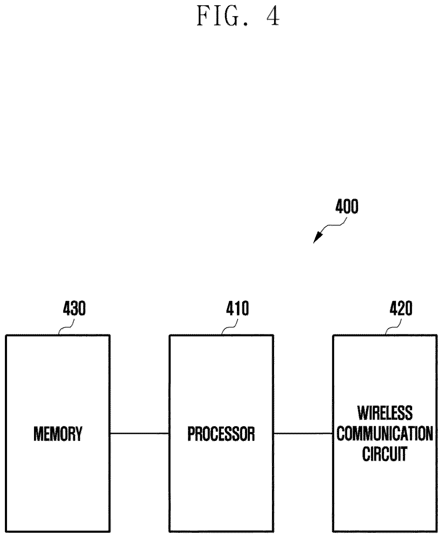

FIG. 4 is a block diagram of an electronic device 400 for selecting a reception beam according to various embodiments. According to an embodiment, the electronic device 400 of FIG. 4 may be at least partially similar to the electronic device 400 of FIG. 1, FIG. 2, or FIG. 3, or may further include other embodiments of the electronic device.

Referring to FIG. 4, according to various embodiments, the electronic device 400 may include a processor 410, a wireless communication circuit 420, and/or a memory 430. According to an embodiment, the processor 410 may be substantially the same as the processor 120 of FIG. 1 or may include the processor 120. According to an embodiment, the wireless communication circuit 420 may be substantially the same as the wireless communication module 192 of FIG. 1 or may include the wireless communication module 192. According to an embodiment, the memory 430 may be substantially the same as the memory 130 of FIG. 1 or may include the memory 130.

According to various embodiments, the processor 410 may be operatively connected to the wireless communication circuit 420 and/or the memory 430. According to an embodiment, the processor 410 may include an application processor (AP) (e.g., the main processor 121 of FIG. 1) and/or a communication processor (CP) (e.g., the auxiliary processor 123 of FIG. 1). According to an embodiment, the communication processor may include a first processing part and a second processing part. For example, the first processing part may communicate with a first node (e.g., gNB) of a first wireless communication scheme. As an example, the first processing part may transmit and/or receive control messages and/or data with the first node through the first wireless communication scheme. For example, the second processing part may perform wireless communication with a second node (e.g., eNB) of a second wireless communication scheme. As an example, the second processing part may transmit and/or receive control messages and/or data with the second node through the second wireless network. For example, the first processing part and the second processing part may be composed of software that processes signals and protocols of different frequency bands. For example, the first processing part and the second processing part may be composed of different circuits or different hardware. For example, the first processing part and the second processing part may be logically (e.g., software) separated parts. As an example, the first wireless communication scheme may include a 5^{th} generation communication scheme (e.g., new radio (NR)). As an example, the second wireless communication scheme may be a 4^{th} generation communication scheme, and may include at least one of long-term evolution (LTE), LTE-advanced (LTE-A), or LTE advanced pro (LTE-A pro).

According to various embodiments, the processor 410 may determine whether to initiate an operation to search for an optimal beam, based on information related to the wireless communication environment (e.g., strength of the reception signal) and/or information related to the movement of the electronic device 400. For example, the information related to the wireless communication environment may include at least one of a reception signal strength, a change in reception signal strength, or a signal to noise ratio (SINR). As an example, the reception signal strength may include at least one of a received signal strength indicator (RSSI) of a synchronization signal (e.g., synchronization signal block (SSB) (or reference signal), a reference signal received power (RSRP), or a reference signal received quality (RSRQ) received from the external device through a reception beam configured at a previous time point for communication with the external device.

According to an embodiment, the processor 410 may identify a signal-to-noise ratio (SINR) of a signal (e.g., a synchronization signal) received from an external device (e.g., a base station). As an example, the signal-to-noise ratio may include an average of the signal-to-noise ratio (SINR) detected based on the signal (e.g., a synchronization signal) received from the external device (e.g., a base station) during a specified first time period. For example, when the signal-to-noise ratio of the reception signal satisfies the specified first condition, the processor 410 may determine that the optimal reception beam for communication with an external device is searched. As an example, the state satisfying the specified first condition may include a state in which the signal-to-noise ratio of the reception signal is less than a certain level. For another example, when the signal-to-noise ratio of the reception signal does not satisfy the specified first condition, the processor 410 may determine that the optimal reception beam for communication with an external device is not searched. As an example, the state that does not satisfy the specified first condition may include a state in which the signal-to-noise ratio of a reception signal exceeds a certain level.

According to an embodiment, the processor 410 may identify the amount of change in the reception signal strength of a signal (e.g., a synchronization signal or a reference signal) received from an external device (e.g., a base station) for a specified second time period. For example, when the amount of change in the reception signal strength satisfies the specified second condition, the processor 410 may determine that the optimal reception beam for communication with an external device is searched. As an example, the state that satisfies the specified second condition may refer to a state in which the amount of change in the reception signal strength of the signal received during the specified second time period exceeds a certain level. For another example, when the amount of change in the reception signal strength does not satisfy the specified second condition, the processor 410 may determine that the optimal reception beam for communication with an external device is not searched. As an example, the state that does not satisfy the specified second condition may refer to a state in which the amount of change in the reception signal strength of the signal received during the specified second time period is less than a certain level.

According to various embodiments, when it is determined that the processor 410 searches for an optimal reception beam for communication with an external device, the processor 410 may identify (or estimate) the incident directions of the reception signals, based on the difference in reception signal strengths of the signals received through at least two beams (e.g., reference beam). According to an embodiment, when it is determined that the optimal reception beam is searched, the processor 410 may select a first beam set (e.g., a reference beam) to be used to identify the incident directions of the reception signals. For example, the processor 410 may select the first beam set from among a plurality of beam sets based on information related to the wireless communication environment and/or the accuracy of a previously selected reception beam. As an example, at least two beams included in each beam set may be configured to be different from at least two beams included in another beam set in at least one of beam width or beam direction. As an example, at least two beams included in the first beam set may be configured to be the same or different from beams used to transmit and/or receive signals to and from an external device in at least one of the beam width and beam direction.

According to an embodiment, the processor 410 may detect a difference in reception signal strengths of synchronization signals (or reference signals) received through at least two beams included in the first beam set. For example, the processor 410 may identify the reception signal strengths of the synchronization signals by using the first beam included in the first beam set at the first time point. The processor 410 may identify the reception signal strengths of the synchronization signals by using the second beam included in the first beam set at the second time point. The processor 410 may detect the difference in reception signal strengths identified at the first time point and the second time point.

According to an embodiment, the processor 410 may estimate the incident directions of the synchronization signals, based on the difference in reception signal strengths of the synchronization signals (or reference signals) received through at least two beams included in the first beam set.

According to various embodiments, the processor 410 may select at least one candidate beam that may be determined as the optimal reception beam, based on the incident directions of the reception signals (e.g., synchronization signals). According to an embodiment, the processor 410 may select at least one candidate beam based on incident directions of reception signals (e.g., synchronization signals) and an error range (margin) related to the candidate beam. For example, the error range related to the candidate beam may be configured based on information related to the wireless communication environment and/or the accuracy of a previously selected receiving beam.

According to various embodiments, the processor 410 may select a reception beam, based on at least one candidate beam selected based on incident directions of reception signals (e.g., synchronization signal). According to an embodiment, when the processor 410 selects one candidate beam based on the incident directions of the reception signals (e.g., synchronization signals), the processor 410 may determine the selected candidate beam as a reception beam for communication with an external device, based on the incident directions of the reception signals (e.g., synchronization signals). According to an embodiment, when a plurality of candidate beams are selected based on the incident directions of the reception signals (e.g., synchronization signals), the processor 410 may identify the reception signal strength for each candidate beam. The processor 410 may select a candidate beam with the greatest reception signal strength among a plurality of candidate beams as a reception beam for communication with an external device. For example, the reception signal strength for a candidate beam may include the reception signal strengths of synchronization signals (or reference signals) received through each candidate beam at different times.

According to various embodiments, the wireless communication circuit 420 may receive a signal from an external device (e.g., the LTE base station 440 or NR base station 450 of FIG. 4C) or transmit a signal to the external device through a beam formed using a plurality of antennas (e.g., the antenna 248 of FIG. 2). According to an embodiment, the wireless communication circuit 420 may include a first communication circuit and a second communication circuit. For example, the first communication circuit may include a first RFIC (e.g., the first RFIC 222 of FIG. 2) and a first RFFE (e.g., the first RFFE 232 of FIG. 2) for communication with the first node of the first wireless communication scheme. For example, the second communication circuit may include a second RFIC (e.g., the third RFIC 226 of FIG. 2) and a second RFFE (e.g., the third RFFE 236 of FIG. 2) for communication with the second node of the second wireless communication scheme.

According to various embodiments, the memory 430 may store various data used by at least one component (e.g., the processor 410 or the wireless communication circuit 420) of the electronic device 400. According to an embodiment, the memory 430 may store various instructions that may be executed by the processor 410. For example, the data may include at least one of information related to a plurality of beam sets available to estimate the incident directions of the reception signals, information related to a plurality of beams available for communication with an external device in the electronic device 400, or a table that stores the relationship between the difference in reception signal strength and the incident direction.

According to various embodiments, the processor 410 of the electronic device 400 may measure the strength of the first beam generated from at least one external electronic device (e.g., a first base station) by using the directional beam in the first direction. According to an embodiment, the electronic device 400 may use a directional beam corresponding to at least one direction (e.g., the first direction), based on an antenna array (e.g., the antenna module 197 of FIG. 1). The electronic device 400 may measure the strength of the first beam generated from the first base station by using the directional beam in the first direction.

According to various embodiments, the processor 410 of the electronic device 400 may measure the strength of the second beam generated from at least one external electronic device (e.g., a first base station and a second base station) by using the directional beam in the second direction. According to an embodiment, the electronic device 400 may use a directional beam corresponding to a second direction different from the first direction, based on the antenna array 197. The electronic device 400 may use the directional beam in the second direction to measure the strength of the second beam generated from at least one of the first base station and the second base station.

According to various embodiments, the memory 430 of the electronic device 400 may store priorities corresponding to the first beam and the second beam. According to various embodiments, when the amount of change in the strength of the first beam exceeds the first threshold value, the processor 410 may adjust the priorities for the first beam and the second beam, and when the amount of change in the strength of the first beam is less than or equal to the first threshold value, the beam pair link for the first beam may be maintained.

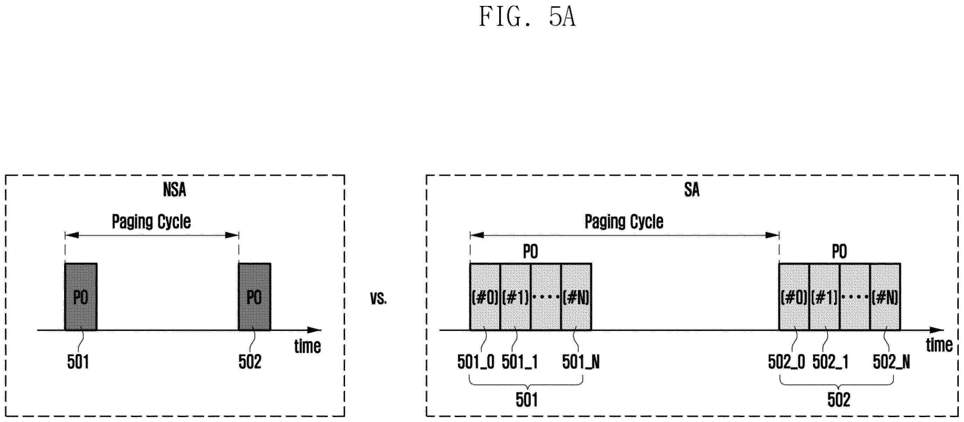

FIG. 5A illustrates paging message transmission and reception operations of an electronic device in an NSA 5G network environment and an SA 5G network environment according to various embodiments.

In the NSA 5G network and SA 5G network environments, the electronic device (e.g., the electronic device 400 of FIG. 4) may differently configure the reception target of the paging message. For example, in the case of NSA, the electronic device 400 may perform a paging message reception operation by using an LTE base station, and in the case of SA, may perform a paging message reception operation by using a 5G base station. Unlike the paging transmission and reception operations of a single-beam-based LTE base station, the 5G base station's transmission and reception operations are based on multi-beams, so the same paging information may be repeatedly transmitted to different beams. In such a 5G environment, the electronic device 400 may perform a beam search operation to find an optimal beam according to a need among several beams (=multi-beams) used by the base station.

A paging occasion (PO) (e.g., a first PO 501 and a second PO 502) may refer to a time resource for receiving a paging message. The index in parentheses in the paging occasion (PO) may refer to one of the different beams used in the transmission and reception processes, and the electronic device 400 may receive the paging message by using a plurality of multi-beams in the SA 5G network. For example, referring to the left graph of FIG. 5A, the electronic device 400 in the NSA 5G network environment may receive the paging message in the paging occasion (PO) (e.g., the first PO 501 and the second PO 502) by using one single beam. On the other hand, referring to the right graph of FIG. 5A, the electronic device 400 in the SA 5G network environment may repeatedly transmit the paging message by using a plurality of multi-beams (e.g., the 0^{th} beam 501_0, the first beam 501_1, and the N^{h} beam 501_N) even in one PO. Hereinafter, the number of multi-beams that may be used in the SA 5G network environment is assumed to be 64 (N=63), but the number of multi-beams that may be used in the SA 5G network environment may not be limited thereto.

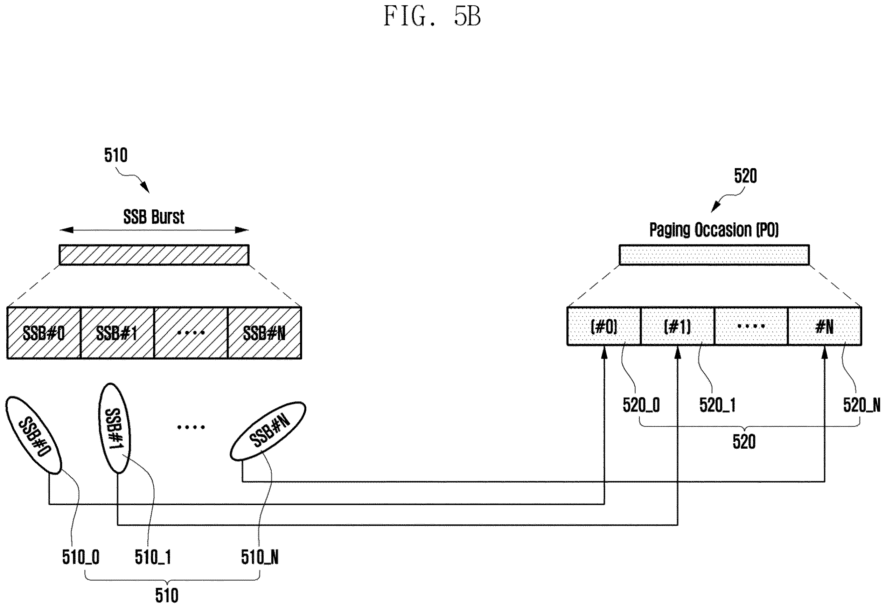

FIG. 5B illustrates the relationship between a synchronization signal block (SSB) and a paging occasion (PO) in a communication process of an electronic device according to various embodiments.

A beam used in the paging occasion (PO) (e.g., the first PO 501 in FIG. 5A and the second PO 502 in FIG. 5A) may be mapped to a synchronization signal block (SSB) used in a base station. Here, the synchronization signal block (SSB) may refer to one block unit for transmitting information. At least one SSB may include beams having specific directivity, and a plurality of SSBs may form an SSB burst 510 to be periodically transmitted. The SSB burst 510 may refer to a bundle of SSBs. For example, the SA 5G base station may form 64 SSBs with the SSB burst 510 for transmission, and map 64 paging messages one-to-one in response to the transmitted SSBs.

According to an embodiment, before receiving the paging message or in a situation of receiving the paging message, the electronic device 400 may determine which of the plurality of terminal beams (e.g., 0^{th} beam 510_0 to N^{th} beam 510 _N) of the electronic device to use for at least one base station beam (SSB) to receive the paging messages (e.g., 0^{th} page 520_0 to N^{th} page 520_N)). That is, the electronic device 400 may determine an optimal combination between the base station beam and the terminal beam for receiving the paging messages.

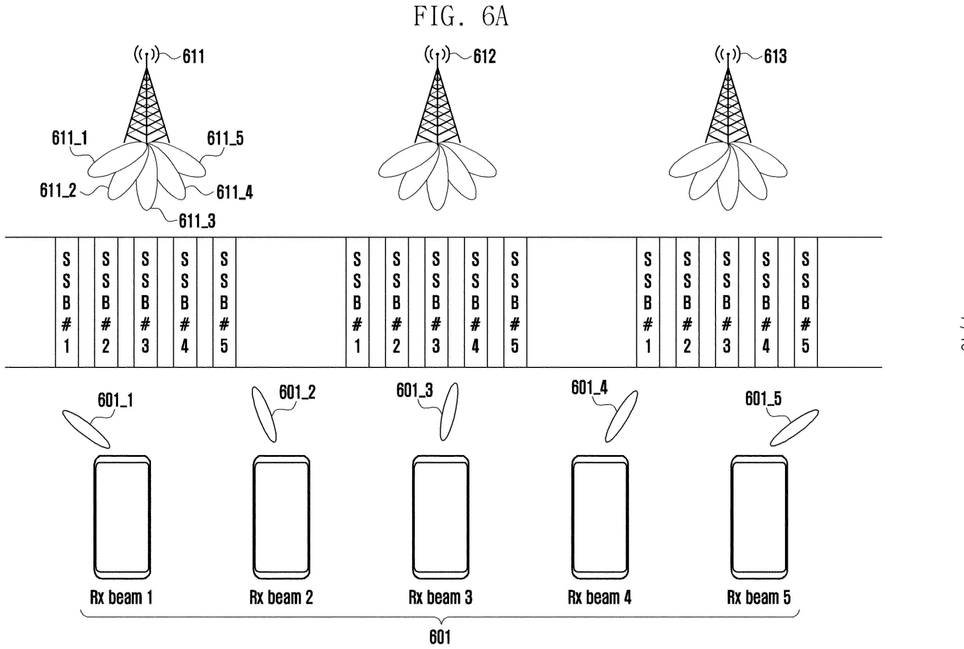

For example, the 0^{th} beam 510_0 may be mapped to the 0^{th} page 520_0 to receive the paging message of the 0^{th} page 520_0, and the first beam 510_1 may be mapped to the first page 520_1 to receive the paging message of the first page 520_1. A plurality of terminal beams (e.g., 0^{th} beam 510_0 to N^{th} beam 510_N) may have a specific directionality. The electronic device 400 may determine a different combination of beams and pages that may receive the paging message, depending on the directionality of a plurality of terminal beams (e.g., the 0^{th} beam 510_0 to N^{th} beam 510_N). The strength of the reception signal of the paging message may be determined differently depending on the combination of beams and pages, and the electronic device 400 may determine the optimal combination of beams and pages that maximize the signal strength based on the strength of the reception signal of the paging message. The process of finding a combination of beams and pages will be described with reference to FIG. 6A.

FIG. 6A illustrates a process for searching for the optimal beam combination of an electronic device according to various embodiments.

Referring to FIG. 6A, under a next-generation mobile communication system (e.g., 5G new radio (NR)), at least one external electronic device (e.g., a first base station 611, a second base station 612, and a third base station 613) may transmit a synchronization signal block (SSB). Hereinafter, the at least one external electronic device is described as the first base station 611, but is not limited to the first base station 611. According to an embodiment, the first base station 611 may transmit an SSB corresponding to at least one direction (or Tx beam). Referring to FIG. 6A, it is illustrated that one base station transmits the SSB by using Tx beams (611_1, 611_2, 611_3, 611_4, and 611_5) corresponding to five directions, but is not limited to five directions. The first base station 611 may transmit the SSB to match the timing according to transmission and reception of signals in the electronic device 601, and transmit the SSB by using a Tx beam based on the configured direction.

Referring to FIG. 6A, an electronic device 601 (e.g., the electronic device 101 of FIG. 1) according to various embodiments may generate a plurality of Rx beams (601_1, 601_2, 601_3, 601_4, and 601_5) by using an antenna module (e.g., the antenna module 197 in FIG. 1), and transmit the plurality of Rx beams. According to various embodiments, in order to search for an optimal beam pair, the electronic device 601 may fix the first Rx beam 601_1 corresponding to the first direction and measure the strength of signals (e.g., reference signals received power (RSRP) of the SSB) corresponding to the plurality of Tx beams 611_1, 611_2, 611_3, 611_4, and 611_5. After measuring the signal strength based on the first Rx beam 601_1, the electronic device 601 may fix the second Rx beam 601_2 corresponding to the second direction and measure the strength of signals corresponding to the plurality of Tx beams 611_1, 611_2, 611_3, 611_4, and 611_5. According to the above-described measurement operation, the electronic device 601 may measure the signal strength (e.g., RSRP of the SSB) as many times as "the number of beams of Tx * the number of beams of Rx" in response to one base station. According to various embodiments, the electronic device 601 may configure the number of searches for searching for an optimal beam pair and measure the signal strength (e.g., RSRP of SSB) based on the configured number of searches. The electronic device 400 may have to maintain an active state while searching for an optimal beam pair. As the number of searches for a beam pair increases in the electronic device 400, the time used for the search may increase, and the time for maintaining the active state may also increase. During this beam pair search process, the electronic device 101 may consume a lot of current. In addition, the processing speed of paging messages may decrease during the beam pair search process.

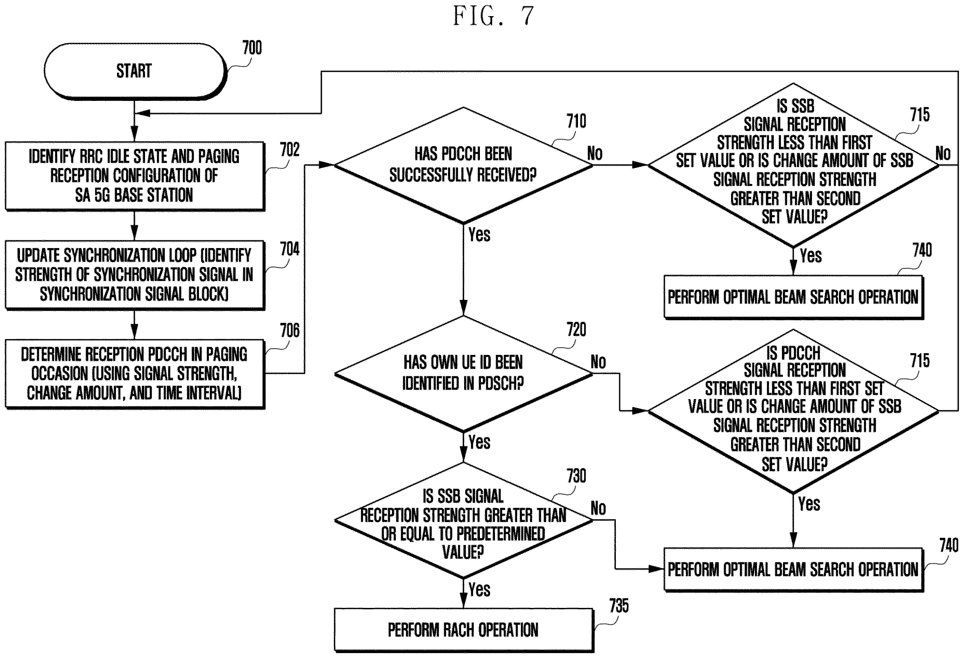

The electronic device 400 according to various embodiments of the disclosure may prevent unnecessary current consumption by reducing the number of times of searching for an optimal beam pair and control the processing speed of the paging message not to decrease. The operation for reducing the number of times that the electronic device 400 searches for an optimal beam pair will be described with reference to FIG. 7.

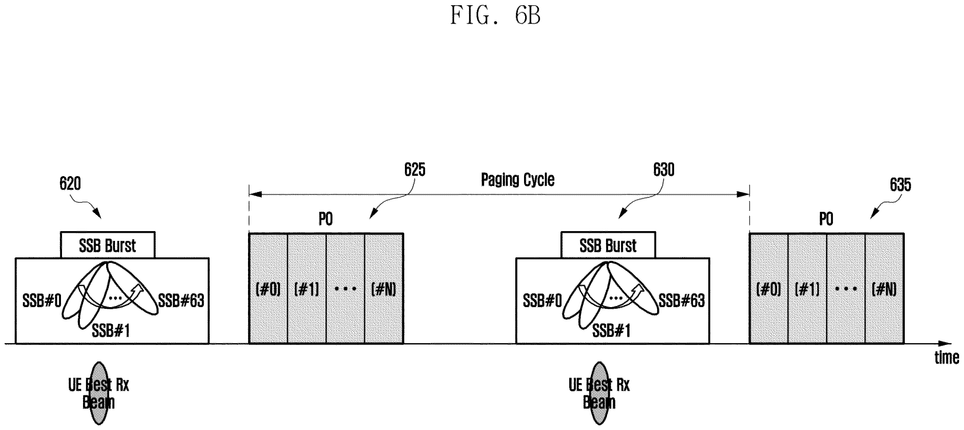

FIG. 6B illustrates a synchronization loop update process of an electronic device according to various embodiments.

According to an embodiment, the electronic device 400 may update the synchronization loop for smooth paging reception in the SA 5G network. The synchronization loop may include automatic gain control (AGC), automatic frequency control (AFC), and automatic timing control (ATC). When receiving radio waves whose signal strength changes, the electronic device 400 may use automatic gain control (AGC) to adjust the amplification degree of the receiver so that the output may always maintain a constant level. Alternatively, the electronic device 400 may maintain a desired frequency band when receiving radio waves whose frequency changes by using an automatic frequency control (AFC). Alternatively, the electronic device 400 may use automatic timing control (ATC) to adjust the timing of the receiver to obtain a constant output when receiving radio waves whose reception timing changes.

The electronic device 400 may enter an idle state for a certain period of time (e.g., 1 second or 2 seconds) and then enter a connected state from the idle state through an inactive state in response to identifying its identification (ID) in the paging message. In order to normally receive the paging message, the electronic device 400, which remains in the idle state for a certain period of time and then reconnects, may synchronize at least one of time, frequency, and signal strength to an optimal beam within the first SSB burst 620 before entering the idle state. The optimal beam within the first SSB burst 620 before entering the idle state may refer to the beam with the greatest signal strength within the first PO 625 before entering the idle state. The electronic device 400 may update the synchronization loop for synchronization with the optimal beam within the first SSB burst 620. The electronic device 400 may measure at least one of the time, frequency, and signal strength of the optimal beam within the second SSB burst 630 currently used on the electronic device, and compare the optimal beam with the optimal beam within the first SSB burst 620 before entering the idle state. The optimal beam within the second SSB burst 630 currently used on the electronic device may refer to the beam with the greatest signal strength within the second PO 635. The electronic device 400 may measure the strength of the signal of the beam within the received second SSB burst 630 by updating the synchronization loop, and measure the amount of change in signal strength by comparing the signal strength with the signal strength of the optimal beam within the first SSB burst 620 before entering the idle state.

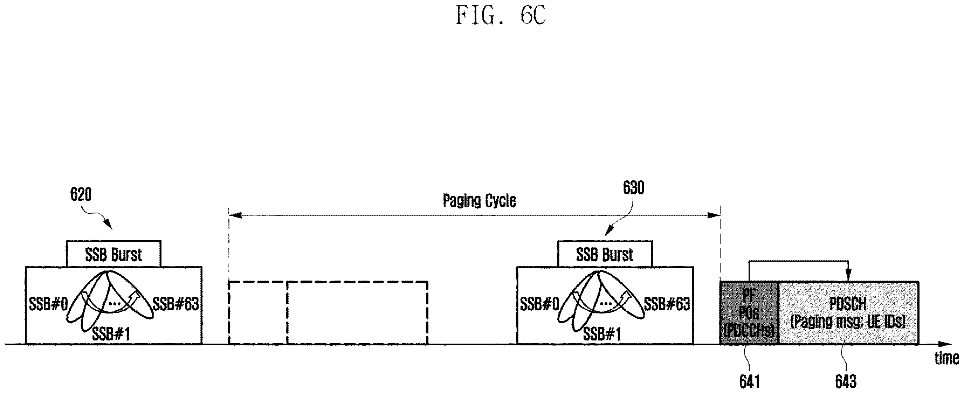

FIG. 6C illustrates a paging message reception process of an electronic device according to various embodiments.

According to an embodiment, because the electronic device 400 transmits and receives data with an optimal beam combination between the base station and the electronic device 400 in the connected state before changing to the idle state, the electronic device 400 may maintain a beam for transmitting and receiving a paging message without changing the beam as long as there is no special state change. As described in FIG. 6B, considering the SSB signal reception cycle and the PO cycle, the electronic device 400 may perform a synchronization loop update operation through reception of the SSB signal having the closest reception time among at least one SSB signal existing before the PO. The SSB signal received through the electronic device 400 may not be limited to the closest in time to the PO. For example, in a situation where the period of the PO is 2s (sec) and the period of reception of the SSB signal is 20ms, the electronic device 400 may detect all SSB signals included in 2s, which is a time interval between the first PO and the second PO, and determine to receive at least one of a plurality of detected SSB signals.

The electronic device 400 may periodically repeat the synchronization loop update operation to determine the current measurement signal strength and the signal strength change (difference from the previous measurement signal strength) by using the optimal beam combination.

Thereafter, the electronic device 400 may determine which of several paging messages repeated with different beams to receive, considering the currently measured signal strength and the time difference between the SSB burst and the reception paging messages used for the synchronization loop update. For example, compared with a predetermined threshold, when the current signal reception strength exceeds the threshold, the electronic device 400 may control operation by selecting only a specific paging message in one PO. When the current signal reception strength is less than the predetermined threshold, the electronic device 400 may control to increase the number of paging messages in the PO to perform the reception operation because the signal reception strength is relatively low and there is a high possibility of a reception failure in the PO. The electronic device 400 may determine the number of paging messages that perform a reception operation according to the following conditions.
(1) If [signal reception strength (SSB SINR) > first configuration value (threshold)], only one paging message within the paging occasion (PO) is received.
(2) If [first configuration value (threshold) > signal reception strength (SSB SINR) > second configuration value (threshold)], a plurality of paging messages within the paging occasion (PO) are received.
(3) If [signal reception strength (SSB SINR) < second configuration value (threshold)], all paging messages the paging occasion (PO) are received.

According to an embodiment, when the optimal beam (SSB) is located relatively behind within the SSB burst (e.g., the first SSB burst 620 and the second SSB burst 630), the transmission time of the paging message may be relatively long because the SSB transmitted first within the SSB burst is mapped to the preceding paging occasions (POs) (e.g., the first PO 625 and the second PO 635). In this case, the electronic device 400 may have to maintain an active state until receiving a paging message corresponding to the optimal beam (SSB), and power may be unnecessarily wasted. In order to prevent power waste, the electronic device 400 may control to receive a paging message corresponding to the SSB that is first transmitted from among at least one SSB whose signal reception strength exceeds a predetermined value.

According to an embodiment, when the electronic device 400 may determine a paging message to receive and proceed with a reception operation. The electronic device 400 may receive first signal including information indicating whether a paging message is present through a physical downlink control channel (PDCCH), and identify whether the identification (ID) of the electronic device exists from the paging message received through the physical downlink shared channel (PDSCH) in response to confirmation of the existence of the paging message.

The electronic device 400 may be grouped and operated with other external devices to identify the existence of a paging message. A plurality of terminals in the same group, including the electronic device 400, may identify the existence of the paging message in the same PO (e.g., the first PO 625 and the second PO 635). Because each terminal within the same group may select a beam from a different base station as the optimal beam, the physical downlink control channel (PDCCH) that receives the first signal including information indicating whether a paging message is actually present may be different for each terminal. However, if there is a UE in the UE group that needs to be changed to the RRC connected state, the base station may repeatedly notify that there is a paging message on all physical downlink control channels (PDCCH). A plurality of terminals in the same group, including the electronic device 400, may identify the existence of the paging message and identify the contents of the paging message included in the physical downlink shared channel (PDSCH). The contents of the paging message may include the ID of the terminal (UE), and the electronic device 400 may identify that the same ID as its own ID is included in the paging message, and the state of the electronic device 400 may be changed to a connected state (RRC connected). The electronic device 400 may search for an optimal beam in the SSB burst in response to whether the paging message and the ID exist, or continue to use the existing beam. The electronic device 400 may reduce power consumption by minimizing the operation of searching for the optimal beam, and conditions and operations for minimizing the operation of searching for an optimal beam will be described with reference to FIG. 7.

FIG. 7 is a flowchart illustrating a method of determining whether to perform an optimal beam search operation of an electronic device according to various embodiments.

The illustrated method 1600 may be executed by an electronic device (e.g., the electronic device 400 of FIG. 4) previously described with reference to FIGS. 1 to 6, and the technical features described above will be omitted below. Operations described with reference to FIG. 7 may be implemented based on instructions that may be stored in a computer recording medium or memory (e.g., the memory 430 of FIG. 4).

Referring to FIG. 7, in operation 702 according to various embodiments, the processor (e.g., the processor 410 of FIG. 4) of the electronic device (e.g., the electronic device 400 of FIG. 4) may identify the state of the electronic device 400. For example, the electronic device 400 may be in a state where a beam pair link is established with a base station (e.g., the NR base station 350 of FIG. 3) and may be in a state of transmitting and receiving beam-based data based on the beam pair link. The processor 400 may identify the state of the electronic device 400, based on at least one piece of information on signals based on the beam pair link and/or sensing information detected through a sensor module (e.g., the sensor module 176 of FIG. 1). For example, the processor 410 may identify the communication status of the electronic device 400 and whether the electronic device 400 is indoors, outdoors, on the move, or fixed at a specific location. The processor 410 may identify the location and status of the electronic device 400. The state of the electronic device 400 may include an idle state (RRC idle) and a connected state (RRC connected). The processor 410 may identify the paging reception configurations of the SA 5G base station.

According to various embodiments, in operation 704, the processor 410 may measure the strength value of the beam pair-linked first beam. The processor 410 may measure the strength value of the signal for the first beam currently beam pair-linked, based on the determined number of measurements (e.g., a measurement period). For example, the electronic device 400 may be in a beam pair link state with a base station, and may transmit the first beam to the base station for transmission and reception of a signal. The processor 410 may measure the strength value of the signal with respect to the first beam.

In operation 706, the processor 410 may determine a physical downlink control channel (PDCCH) to receive the first signal including information indicating whether a paging message is present in the paging occasion (PO). According to an embodiment, the electronic device 400 may determine the paging message to be received and perform a reception operation.

In operation 710, the electronic device 400 may receive the first signal including information indicating whether a paging message is present through a physical downlink control channel (PDCCH). The electronic device 400 may operate in a group with other external devices to identify the existence of the paging message. A plurality of terminals within the same group, including the electronic device 400, may identify the existence of the paging message within the same PO (e.g., the first PO 625 and the second PO 635 of FIG. 6). Because each terminal within the same group may select a beam from a different base station as the optimal beam, the physical downlink control channel (PDCCH) that receives the first signal including information indicating whether a paging message is actually present may be different for each terminal. However, if there is a UE in the UE group that needs to be changed to the RRC connected state, the base station may repeatedly notify that there is a paging message on all physical downlink control channels (PDCCH). A plurality of terminals in the same group, including the electronic device 400, may identify the existence of the paging message and identify whether the identification (ID) of the electronic device exists from the paging message received through the physical downlink shared channel (PDSCH).

In operation 715, the processor 410 may measure the reception strength of the SSB signal and the amount of change in the signal reception strength. According to an embodiment, the electronic device 400 may update the synchronization loop for synchronization with the optimal beam (SSB) within the first SSB burst 620. The electronic device 400 may measure at least one of the time, frequency, and signal strength of the optimal beam within the second SSB burst (e.g., the second SSB burst 630 of FIG. 6) currently used on the electronic device, and compare the optimal beam with the optimal beam within the first SSB burst (e.g., the first SSB burst 620 of FIG. 6) before entering the idle state. The optimal beam within the second SSB burst 630 currently used on the electronic device may refer to the beam with the greatest signal strength within the second PO (e.g., the second PO 635 of FIG. 6). The electronic device 400 may measure the strength of the signal of the beam within the received second SSB burst 630 by updating the synchronization loop, and measure the amount of change in signal strength by comparing the signal strength with the signal strength of the optimal beam within the first SSB burst 620 before entering the idle state.

According to an embodiment, when the signal reception strength of the optimal beam (SSB) measured is less than the first configuration value or the amount of change in the signal reception strength of the optimal beam (SSB) measured has a negative value compared to the signal strength of the optimal beam (SSB) within the first SSB burst 620 before entering the idle state, and the amount of change exceeds the second configuration value, the processor 410 may perform an operation for searching for an optimal beam in addition to the currently configured beam (740). This may be expressed as the following formula.
(1) [SSB SINR < first configuration value or size of change in SSB SINR > second configuration value] -> the electronic device 400 performs an operation to search for the optimal beam.

When the measured signal reception strength of the optimal beam (SSB) is less than the first configuration value, the processor 410 may control to search for the optimal beam because the signal reception strength may be insufficient and thus smooth signal transmission may not be performed. In addition, when the amount of change in the signal reception strength of the optimal beam (SSB) measured exceeds a certain level, the processor 410 may determine that the signal reception situation has suddenly deteriorated, and control to search for the optimal beam because smooth signal transmission may not be performed.

If the condition (1) is not satisfied, the processor 410 may perform operation 702 again. For example, when the measured signal reception strength of the optimal beam SSB exceeds the first configuration value, the processor 410 may determine that the signal reception strength is sufficient and determine not to perform an operation of searching for the optimal beam. The electronic device 400 may prevent unnecessary power consumption by minimizing an operation of searching for the optimal beam.

In operation 720, the processor 410 may determine the content of the paging message in response to receiving the first signal including information indicating whether a paging message is present through a physical downlink control channel (PDCCH) to identify whether the ID of the electronic device 400 is included. A plurality of terminals in the same group, including the electronic device 400, may identify that there is a paging message, and identify the content of the paging message included in the physical downlink shared channel (PDSCH). The content of the paging message may include an ID of the terminal (UE), and the electronic device 400 may identify that the same ID as its own ID is included in the paging message, and change the state of the electronic device 400 to a connected state (RRC connected).

In operation 725, the processor 410 may identify that the same ID as the ID of the electronic device 400 is not included in the paging message, and identify at least one of the signal strength of the first signal including information indicating whether a paging message is present or the signal strength of the paging message received through the physical downlink shared channel (PDSCH). In addition, the processor 410 may identify that the same ID as the ID of the electronic device 400 is not included in the paging message, and identify the amount of change in the signal reception strength of the optimal beam (SSB).

According to an embodiment, the processor 410 may determine to perform an operation of searching for an optimal beam in response to identifying that at least one of the signal strength of the first signal including information indicating whether a paging message is present or the signal strength of the paging message received through the physical downlink shared channel (PDSCH) is less than a preconfigured configuration value. When at least one of the signal strength of the first signal including information indicating whether a paging message is present or the signal strength of the paging message received through the physical downlink shared channel (PDSCH) is below a certain level, it may be difficult to guarantee whether the electronic device 400 receives the next paging message even with a small change. Therefore, when at least one of the signal strength of the first signal including information indicating whether a paging message is present or the signal strength of the paging message received through the physical downlink shared channel (PDSCH) is below a certain level, the processor 410 may determine to perform an operation of searching for an optimal beam, even if the reception of the current paging message is successful (740).

According to an embodiment, even when the paging message is received, the processor 410 may control to perform an operation of searching for the optimal beam when the amount of change in the signal reception strength of the optimal beam (SSB) exceeds a certain level and the signal reception strength is rapidly reduced. Even when receiving the current paging message is possible, it may be difficult for the electronic device 400 to receive the next paging message if the signal reception strength of the optimal beam (SSB) is rapidly decreased. In this case, the processor 410 may determine to perform an operation of searching for the optimal beam for smooth reception of the next paging message (740). This is expressed as the following equation.
(1) [PDCCH SINR < first configuration value] or [PDSCH SINR < second configuration value], or [size of change in SSB SINR > third configuration value] -> the electronic device 400 performs an operation to search for the optimal beam.
(2) [PDCCH SINR > first configuration value] -> the electronic device 400 does not perform an operation to search for the optimal beam.

When the signal reception strength of the PDCCH is less than a certain level, because paging reception may become difficult even with a small change (e.g., attenuation of the reception signal strength) in the next PO, the processor 410 may determine to perform an operation of searching for the optimal beam to prevent such a situation. Alternatively, when the signal reception strength of the PDSCH is less than a certain level, because paging reception may become difficult even with a small change (e.g., attenuation of the reception signal strength) in the next PO, the processor 410 may determine to perform an operation of searching for the optimal beam to prevent such a situation.

When the amount of change in the signal reception strength of the SSB exceeds a certain level, the processor 410 may determine that the signal reception situation has suddenly deteriorated, and control to search for an optimal beam because smooth signal transmission may not be performed.

According to an embodiment, in response to receiving the first signal by using the PDCCH and identifying the ID of the electronic device 400 in the paging message, in operation 730, the processor 410 may identify whether the signal reception strength of the received first beam (SSB) exceeds a certain level. The processor 410 may control to perform a random access channel (RACH) operation in response to identifying that the signal reception strength of the received first beam (SSB) exceeds the certain level. The random access channel (RACH) may refer to the first message transmitted to the base station from the electronic device 400 after the electronic device 400 is switched from an idle state to a connected state. The random access channel (RACH) operation may refer to an operation of transmitting a message to the base station from the electronic device 400 after the electronic device 400 is switched from the idle state to the connected state.

According to an embodiment, in response to identifying that the signal reception strength of the received first beam (SSB) is less than a certain level, the processor 410 may determine to perform an operation of searching for an optimal beam for receiving a paging message in addition to the received first beam (SSB) (740).

According to an embodiment, the processor 410 may measure a signal strength value for the second beam searched as a result of an operation of searching for an optimal beam. The processor 410 may measure a difference between the strength value of the signal for the second beam and the strength value of the signal for the first beam currently beam pair-linked. If the difference between the first beam and the second beam exceeds a certain level, the processor 410 may establish a beam pair link by changing the first beam currently beam pair-linked to the second beam.

An electronic device according to various embodiments may include a wireless communication circuit and a processor operatively connected to the wireless communication circuit, and the processor may receive a first signal, which includes information indicating whether a paging message is present, from an external device through a physical downlink control channel (PDCCH), identify whether the identification (ID) of the electronic device is present from the paging message received through a physical downlink shared channel (PDSCH), in response to identifying that the paging message is present, identify the quality of the first signal and the quality of a synchronization signal block (SSB) received from the external device, in response to identifying that the identification (ID) of the electronic device is present in the paging message, and determine whether to search for a new reception beam for wireless communication with the external device, in response to identifying that at least one of the quality of the first signal or the quality of the synchronization signal block (SSB) satisfies specified conditions.

According to an embodiment, the processor may determine not to search for a new reception beam for wireless communication with the external device, in response to the signal strength of the reception beam exceeding a certain level.

According to an embodiment, the processor may determine to not to search for a new reception beam for wireless communication with the external device, in response to identifying that the amount of change in the signal strength of the synchronization signal block (SSB) is less than a certain level.

According to an embodiment, the processor may determine to not to search for a new reception beam for wireless communication with the external device, in response to receiving a first signal including information indicating whether a paging message is present and the signal strength of the first signal exceeds a certain level.

According to an embodiment, the processor may determine to not to search for a new reception beam for wireless communication with the external device, in response to the signal strength of the paging message received through the physical downlink shared channel (PDSCH) exceeding a certain level.

According to an embodiment, the processor may determine to not to search for a new reception beam for wireless communication with the external device, in response to identifying that the identification (ID) of the electronic device is not present in the paging message.

According to an embodiment, the processor may search for a new reception beam for wireless communication with the external device, in response to the determination to search for a new reception beam for wireless communication with the external device, identify the reception signal strength for each candidate beam in case that a plurality of candidate beams are searched for, and select a candidate beam with the relatively largest reception signal strength among the plurality of candidate beams as the reception beam for wireless communication with the external device.

According to an embodiment, the processor may search for a new reception beam for wireless communication with the external device, in response to the determination to search for a new reception beam for wireless communication with the external device, and control to transmit or receive signals by using an existing reception beam in case that at least one candidate beam has not been searched for.

An electronic device according to various embodiments may include a wireless communication circuit and a processor operatively connected to the wireless communication circuit, and the processor may identify quality of a synchronization signal block (SSB) received from an external device, and determine whether to search for a new reception beam for wireless communication with the external device, in response to identifying that the quality of the synchronization signal block (SSB) satisfies the specified conditions.

According to an embodiment, the processor may determine not to search for a new reception beam for wireless communication with the external device, in response to the signal strength of the reception beam exceeding a certain level.

According to an embodiment, the processor may determine to not to search for a new reception beam for wireless communication with the external device, in response to identifying that the amount of change in the signal strength of the synchronization signal block (SSB) is less than a certain level.

According to an embodiment, the processor may search for a new reception beam for wireless communication with the external device, in response to the determination to search for a new reception beam for wireless communication with the external device, identify the reception signal strength for each candidate beam in case that a plurality of candidate beams are searched for, and select a candidate beam with the relatively largest reception signal strength among the plurality of candidate beams as the reception beam for wireless communication with the external device.

According to an embodiment, the processor may search for a new reception beam for wireless communication with the external device, in response to the determination to search for a new reception beam for wireless communication with the external device, and control to transmit or receive signals by using an existing reception beam in case that at least one candidate beam has not been searched for.

An operating method of an electronic device that performs beam search according to various embodiments may include receiving a first signal, which includes information indicating whether a paging message is present, from an external device through a physical downlink control channel (PDCCH), identifying whether the identification (ID) of the electronic device is present from the paging message received through a physical downlink shared channel (PDSCH), in response to identifying that the paging message is present, identifying the quality of the first signal and the quality of a synchronization signal block (SSB) received from the external device, in response to identifying that the identification (ID) of the electronic device is present in the paging message, and determining whether to search for a new reception beam for wireless communication with the external device, in response to identifying that at least one of the quality of the first signal or the quality of the synchronization signal block (SSB) satisfies specified conditions.

According to an embodiment, determining whether to search for a new reception beam for wireless communication with the external device may further include determining not to search for a new reception beam for wireless communication with the external device, in response to the signal strength of the reception beam exceeding a certain level.

According to an embodiment, determining whether to search for a new reception beam for wireless communication with the external device may further include determining not to search for a new reception beam for wireless communication with the external device, in response to identifying that the amount of change in the signal strength of the synchronization signal block (SSB) is less than a certain level.

According to an embodiment, determining whether to search for a new reception beam for wireless communication with the external device may further include determining not to search for a new reception beam for wireless communication with the external device, in response to receiving a first signal including information indicating whether a paging message is present and the signal strength of the first signal exceeds a certain level.

According to an embodiment, determining whether to search for a new reception beam for wireless communication with the external device may further include determining not to search for a new reception beam for wireless communication with the external device, in response to the signal strength of the paging message received through the physical downlink shared channel (PDSCH) exceeding a certain level.

According to an embodiment, determining whether to search for a new reception beam for wireless communication with the external device may further include determining not to search for a new reception beam for wireless communication with the external device, in response to identifying that the identification (ID) of the electronic device is not present in the paging message.

According to an embodiment, an operating method of an electronic device that performs beam search may further include searching for a new reception beam for wireless communication with the external device, in response to the determination to search for a new reception beam for wireless communication with the external device, identifying the reception signal strength for each candidate beam in case that a plurality of candidate beams are searched for, and selecting a candidate beam with the relatively largest reception signal strength among the plurality of candidate beams as the reception beam for wireless communication with the external device.

## Claims

1. An electronic device comprising:
memory storing one or more computer programs;
a wireless communication circuit; and
one or more processors communicatively coupled to the memory and the wireless communication circuit,
wherein the one or more computer programs include computer-executable instructions that, when executed by the one or more processors, cause the electronic device to:
receive, from an external device through a physical downlink control channel (PDCCH), a first signal including information indicating whether a paging message is present,
in response to identifying that the paging message is present, identify whether an identification (ID) of the electronic device is present in the paging message received through a physical downlink shared channel (PDSCH),
in response to identifying that the ID of the electronic device is present in the paging message, identify a quality of the first signal and a quality of a synchronization signal block (SSB) received from the external device, and
in response to identifying that at least one of the quality of the first signal or the quality of the SSB satisfies specified conditions, determine whether to search for a new reception beam for wireless communication with the external device.

2. The electronic device of claim 1, wherein the one or more computer programs further include computer-executable instructions that, when executed by the one or more processors, cause the electronic device to:
in response to a signal strength of a reception beam exceeding a certain level, determine not to search for the new reception beam for wireless communication with the external device.

3. The electronic device of claim 1, wherein the one or more computer programs further include computer-executable instructions that, when executed by the one or more processors, cause the electronic device to:
in response to identifying that an amount of change in a signal strength of the SSB is less than a certain level, determine not to search for the new reception beam for wireless communication with the external device.

4. The electronic device of claim 1, wherein the one or more computer programs further include computer-executable instructions that, when executed by the one or more processors, cause the electronic device to:
in response to receiving the first signal including the information indicating whether the paging message is present and a signal strength of the first signal exceeds a certain level, determine not to search for the new reception beam for wireless communication with the external device.

5. The electronic device of claim 4, wherein the one or more computer programs further include computer-executable instructions that, when executed by the one or more processors, cause the electronic device to:
in response to the signal strength of the paging message received through the PDSCH exceeding a certain level, determine not to search for the new reception beam for wireless communication with the external device.

6. The electronic device of claim 1, wherein the one or more computer programs further include computer-executable instructions that, when executed by the one or more processors, cause the electronic device to:
in response to identifying that the ID of the electronic device is not present in the paging message, determine not to search for the new reception beam for wireless communication with the external device.

7. The electronic device of claim 1, wherein the one or more computer programs further include computer-executable instructions that, when executed by the one or more processors, cause the electronic device to:
in response to determining to search for the new reception beam for wireless communication with the external device, search for the new reception beam for wireless communication with the external device,
identify a reception signal strength for each candidate beam in case that a plurality of candidate beams are searched for, and
select a candidate beam with a largest reception signal strength among the plurality of candidate beams as a reception beam for wireless communication with the external device.

8. The electronic device of claim 1, wherein the one or more computer programs further include computer-executable instructions that, when executed by the one or more processors, cause the electronic device to:
in response to determining to search for the new reception beam for wireless communication with the external device, search for the new reception beam for wireless communication with the external device, and
transmit or receive signals by using an existing reception beam in case that at least one candidate beam has not been searched for.

9. An electronic device comprising:
memory storing one or more computer programs;
a wireless communication circuit; and
one or more processors communicatively coupled to the memory and the wireless communication circuit,
wherein the one or more computer programs include computer-executable instructions that, when executed by the one or more processors, cause the electronic device to:
identify a quality of a synchronization signal block (SSB) received from an external device, and
in response to identifying that the quality of the SSB satisfies specified conditions, determine whether to search for a new reception beam for wireless communication with the external device.

10. The electronic device of claim 9, wherein the one or more computer programs further include computer-executable instructions that, when executed by the one or more processors, cause the electronic device to:
in response to a signal strength of a reception beam exceeding a certain level, determine not to search for the new reception beam for wireless communication with the external device.

11. The electronic device of claim 9, wherein the one or more computer programs further include computer-executable instructions that, when executed by the one or more processors, cause the electronic device to:
in response to identifying that an amount of change in a signal strength of the SSB is less than a certain level, determine not to search for the new reception beam for wireless communication with the external device.

12. The electronic device of claim 9, wherein the one or more computer programs further include computer-executable instructions that, when executed by the one or more processors, cause the electronic device to:
in response to determining to search for the new reception beam for wireless communication with the external device, search for the new reception beam for wireless communication with the external device,
identify a reception signal strength for each candidate beam based on a plurality of candidate beams being searched for, and
select a candidate beam with a largest reception signal strength among the plurality of candidate beams as a reception beam for wireless communication with the external device.

13. The electronic device of claim 9, wherein the one or more computer programs further include computer-executable instructions that, when executed by the one or more processors, cause the electronic device to:
in response to determining to search for the new reception beam for wireless communication with the external device, search for the new reception beam for wireless communication with the external device, and
transmit or receive signals by using an existing reception beam based on at least one candidate beam having not been searched for.

14. A method performed by an electronic device for performing beam search, the method comprising:
receiving, by the electronic device from an external device through a physical downlink control channel (PDCCH), a first signal including information indicating whether a paging message is present;
in response to identifying that the paging message is present, identifying, by the electronic device, whether an identification (ID) of the electronic device is present in the paging message received through a physical downlink shared channel (PDSCH);
in response to identifying that the ID of the electronic device is present in the paging message, identifying, by the electronic device, a quality of the first signal and a quality of a synchronization signal block (SSB) received from the external device; and
in response to identifying that at least one of the quality of the first signal or the quality of the SSB satisfies specified conditions, determining, by the electronic device, whether to search for a new reception beam for wireless communication with the external device.

15. The method of claim 14, wherein the determining of whether to search for the new reception beam for wireless communication with the external device comprises, in response to a signal strength of a reception beam exceeding a certain level, determining, by the electronic device, not to search for the new reception beam for wireless communication with the external device.
